# EUROPÄISCHE PATENTANMELDUNG

(11) **EP 2 234 042 A1**
(43) Veröffentlichungstag der Anmeldung: **29.09.2010**
(21) Anmeldenummer: 10075081.9
(22) Anmeldetag: 23.02.2010
(51) Int. Cl.: G06K 19/077, G06K 7/00, E03C 1/00, F16L 11/00, F16L 33/00, F16L 35/00

(54) **Mit einem Kennungsmittel versehene Schlauchleitung**

(30) Priorität: 26.03.2009 DE 102009014648
(71) Anmelder: Roman Seliger GmbH, 22848 Norderstedt (DE)
(72) Erfinder: Adam, Michael, 24589 Nortorf (DE); Brandt, Holger, 22869 Schenefeld (DE); Hamkens, Hauke-Peter, 25832 Tönning (DE); Schwarz, Eugen, 21033 Hamburg (DE); Sylla, Jan-Oliver, 25451 Quickborn (DE); Birger, Buhk, 21039 Hamburg (DE)
(74) Vertreter: Wenzel & Kalkoff

(57) **Zusammenfassung**

Eine Schlauchleitung (1), die mit einem Kennungsmittel versehen ist, weist Anschlussenden (11) auf, die jeweils zum Anschluss an eine zum Anschlussende (11) zugehörige Anschlussarmatur (4) ausgebildet sind. Das Kennungsmittel enthält Daten zur eindeutigen Identifizierung der Schlauchleitung und wird dadurch gebildet, dass an jedem Schlauchleitungs-Anschlussende (4) eine Kennung in Form eines Schlauchtransponders (3) unlösbar und ortsfest angebracht ist. Die beiden endseitigen Schlauchtransponder (3) sind jeweils frei von der Anschlussarmatur (4) mit der Schlauchleitung (1) verbunden und mit wenigstens teilweise übereinstimmenden, dauerhaft und unveränderlich hinterlegten Identifizierungsdaten versehen. Mit diesen Maßnahmen werden Manipulation an der Schlauchleitung und/oder den Armaturen oder die Verwendung unzulässiger Armaturen erkennbar oder verhindert.

## Beschreibung

Die Erfindung betrifft eine mit einem Kennungsmittel versehene Schlauchleitung mit Anschlussenden, die jeweils zum Anschluss an eine zum Anschlussende zugehörige Anschlussarmatur ausgebildet sind, wobei das Kennungsmittel Daten zur eindeutigen Identifizierung der Schlauchleitung enthält.

Bei der Kennung handelt es sich um eine solche, die an der einbindungsfreien Schlauchleitung angebracht ist. Die Kennung enthält Daten, die eindeutige Auskunft zu der Schlauchleitung geben. Identifizierende Angaben oder Informationen, die hier allgemein als Daten bezeichnet werden, geben insbesondere über Hersteller, Registriemummer, Schlauchleitungstyp, Druck- und Temperaturbereich, Seriennummer und dergleichen Auskunft. Zur Identifizierung gehören allgemein beschreibende, klassifizierende, konstruktionstechnische, funktionstechnische und/oder verwendungstechnische Angaben. Beispiele dafür sind auch Angaben zum Bautyp, zur Dimensionierung und zu Leistungseigenschaften. Allgemein handelt es sich wenigstens um Angaben, wie sie auf einem Typenschild untergebracht werden.

Die Schlauchenden gattungsgemäßer Schlauchleitungen werden jeweils in eine Anschlussarmatur eingebunden. Eine solche Anschlussarmatur weist ein Verbindungs-Anschlussstück auf, mit der die Schlauchleitung an eine andere Leitung, z. B. an einen anderen Schlauch, ein Rohr, einen Stutzen, einen Flansch oder dergleichen angeschlossen oder angekuppelt wird. Das Anschlussstück kann z. B. ein Kupplungselement oder eine Kupplungshälfte einer mit Ventilen ausgestatteten Trockenkupplung sein. Als Beispiele seien auch ventilfreie Verschraubungs- oder Flanscharmaturen genannt.

Von besonderer Bedeutung ist, dass ein einwandfreies Zusammenspiel, das heißt insbesondere eine zugewiesene Verwendung der Schlauchleitung mit den Armaturen gewährleistet ist. Es kommt darauf an, dass die vorgegebene Schlauchleitung stets nur mit konstruktionsgebundenen und/oder funktionsspezifisch zugehörigen Armaturen verbunden und betrieben wird. Zum Beispiel kann eine Verkürzung der Schlauchleitungslänge oder die Einbindung der Schlauchleitung in andere als vom Hersteller vorgeschriebene Armaturen zu Störungen oder gar Zerstörungen im Betrieb der angeschlossenen, gekuppelten Schlauchleitung führen. Eine Schlauchleitung, die irgendwo mit einer einzigen Kennung versehen ist, genügt Anforderungen hinsichtlich einer ausreichenden Überprüfbarkeit der Verwendung von vorgeschriebenen Armaturen und eines Nachweises korrekter Eigenschaften und Funktionen nicht. Insbesondere kann die Schlauchleitung unzulässig verkürzt werden und auch mit manipulierter Kennung zur Verwendung mit unzulässiger Anschlussarmatur versehen werden. Insbesondere bei Anwendungen in Einrichtungen oder Anlagen der pharmazeutischen Industrie, der chemischen Industrie, der Lebensmittelindustrie und in anderen industriellen, auf den Transport flüssiger Medien ausgerichteten Bereichen werden an die Verträglichkeit und Zusammengehörigkeit verwendeter spezifizierter Leitungskomponenten höchste Anforderungen gestellt. Jede Manipulation an Komponenten einer Leitungsverbindung, insbesondere durch unsachgemäßen Austausch und/oder Reparatur kann zu erheblichen schädigenden Folgen führen. Insoweit ist auch die Haftung eines Herstellers, Händlers oder Anwenders betroffen. In Schadensfällen oder bei Funktionsmängeln gehen Ergebnisse kritischer Prüfung zur ordnungsgemäßen Bereitstellung, Installation und Verwendung zumeist zu Lasten des Herstellers.

Nach alledem besteht ein Bedürfnis, die gattungsgemäße Schlauchleitung, die für zugehörigen Anschlussarmaturen sowie für einen spezifischen anwendungs- und funktionstechnischen Einsatz ausgelegt ist, für diesen Einsatz zuverlässig zu bestimmen und bereitzuhalten und den Einsatz weitgehend gesichert überprüfbar zu machen. Insbesondere soll Manipulation an der Schlauchleitung und/oder den Armaturen bzw. die Verwendung unzulässiger Armaturen verhindert oder zumindest nachweislich erkennbar werden. Die Kennzeichnung soll dennoch einfach bleiben und mit einfachen Mitteln prüfbar sein.

Die genannten Ziele werden erfindungsgemäß in Verbindung mit den Merkmalen der eingangs genannten Schlauchleitung dadurch erreicht, dass das Kennungsmittel dadurch gebildet ist, dass an jedem Schlauchleitungs-Anschlussende eine Kennung in Form eines Schlauchtransponders unlösbar und ortsfest angebracht ist, wobei die beiden endseitigen Schlauchtransponder jeweils frei von der Anschlussarmatur mit der Schlauchleitung verbunden und mit wenigstens teilweise übereinstimmenden, dauerhaft und unveränderlich hinterlegten Identifizierungsdaten versehen sind.

Erfindungsgemäß kommt es zunächst darauf an, dass die Schlauchleitung als solche, das heißt bereits vor Anbringung der Anschlussarmaturen oder von Teilen derselben gekennzeichnet ist. Das erfindungsgemäße Kennungsmittel der Schlauchleitung ist nicht an den Armaturen oder deren Teilen angebracht. Mit der erfindungsgemäßen Doppelkennung an den Schlauchleitungs-Anschlussenden erreicht man, dass eine Manipulation an der Schlauchleitung, insbesondere in Kombination mit den Armaturen jedenfalls behindert und erkennbar wird. Zum Beispiel wird der Austausch einer Armatur erkannt. Eine Verkürzung der Schlauchleitung wird verhindert, da die Schlauchleitung beidseitig gewissermaßen in das Erkennungsmittel eingefasst ist. Die unlösbare und ortsfeste Anbringung erreicht man durch Integration der Schlauchtransponder mit der Schlauchleitung. Unter dieser Integration ist die Einheit von Schlauchleitung und Transponder derart zu verstehen, dass die Schlauchleitung und die beiden Schlauchtransponder als Ganzes einheitlich ausgebildet bzw. hergestellt sind, wobei die Einheit dadurch bestimmt ist, dass sie erkennbar zerstört ist, wenn einer der Transponder von der Schlauchleitung getrennt wird. Eine solche Einheit wird zum Beispiel dadurch hergestellt, dass der Schlauchtransponder in das Wandmaterial der Schlauchleitung eingefügt wird. Eine andere integrierte Anbringung wird zum Beispiel dadurch erreicht, dass die integrale, nur durch Zerstörung beseitigbare Einheit ein den Transponder integrierendes Befestigungsmittel oder -element umfasst, das unlösbar und ortsfest mit der Wandung der Schlauchleitung verbunden ist. Zum Beispiel wird der Schlauchtransponder dann in das ihn tragende Befestigungsmittel unter Verwendung einer Gussmasse integriert.

Unter Transponder wird jede miniaturisierte Sende-/Empfangs-Einrichtung zum Zwecke der Datenerfassung und des Datenabrufs verstanden. In einen solchen Transponder lassen sich insbesondere codierte Daten eingeben, so dass ein elektrisches Typenschild gebildet ist. Die eingegebenen/eingelesenen Daten können nicht ohne Zerstörung oder erkennbare Manipulation verändert werden. Andererseits lassen sich die Transponderdaten manifestieren. Dies geschieht mittels eines Lesegeräts, mit dem die Daten des Transponders abfragbar sind. Wie bekannt, wird der Transponder dabei einem elektrischen bzw. elektromagnetischen Feld des Lesegeräts ausgesetzt, mit der Folge, dass die gespeicherten Daten gesendet und als Antwortsignale empfangen werden. Einfache Transponder, die passiv arbeiten, also zum Senden mit Energie des Lesegeräts versorgt werden, reichen aus. Für die Zwecke der Erfindung bilden Transponder und Lesegerät vorteilhaft ein so genanntes RFID-System (Radio Frequency Identification). Die beiden End-Schlauchtransponder kennzeichnen die Schlauchleitung übereinstimmend, und ein Lesegerät ist zum Auslesen der Transponder-Kennungen vorgesehen. Im Handel sind Transponder mit winzigen Dimensionen in der Größenordnung von wenigen Millimetern erhältlich. Die Transponder bilden daher das geeignete Kennungsmittel zur nur durch Zerstörung auflösbaren Integration mit der Schlauchleitung.

Vorteilhaft weist jedes Schlauchleitungs-Anschlussende einen in Eingriff mit der zugehörigen Anschlussarmatur gelangenden Anschlussbereich auf, an dem der jeweilige End-Schlauchtransponder angebracht ist. Eine mechanische Manipulation an der Transponder-Anbringungsstelle führt dazu, dass der Anschlussbereich erkennbar nicht zum funktionsgerechten, ordnungsgemäßen Einbinden verwendbar ist. Wie schon erwähnt, kann der Transponder zweckmäßig in Gießmaterial eingebettet werden. Diese Verbindung kann stoffschlüssig sein. Eine stoffschlüssige Verbindung kann zweckmäßig auch darin bestehen, dass der Transponder an den Schlauchleitungsmantel oder ein unlösbar mit dem Schlauchleitungsmantel verbundenes Befestigungsmittel/-element geklebt wird.

Eine bevorzugte Gestaltung besteht darin, dass das Befestigungselement durch einen von der Schlauchleitung verbindungswirksam durchsetzten Befestigungsring gebildet ist, der mit einem ihn zum Anbringen an der Schlauchleitung offen haltenden und ihn zur Befestigung unlösbar schließenden Einwegverschluss ausgebildet ist.

Ein solcher Befestigungsring, der ein von der eigentlichen kupplungsfähigen Anschlussarmatur separates Teil ist, lässt sich besonders einfach und dennoch zweckgerecht am Schlauchleitungs-Anschlussende anbringen. Der Einwegverschluss ist dadurch bestimmt, dass der angebrachte geschlossene Befestigungsring eine stoffschlüssige und/- oder kraftschlüssige Verbindung mit dem Schlauchleitungsmantel eingeht, die ohne Zerstörung nicht lösbar ist. Der Befestigungsring kann positionsgenau an das Schlauchleitungs-Anschlussende gesetzt werden. Vorteilhaft kann das Befestigungselement auch mit einem eine formschlüssige Verbindung mit der Schlauchleitung herstellenden, es zumindest gegen axiale Verschiebung längs der Schlauchleitung sperrenden Profil ausgebildet sein.

Eine weitere vorteilhafte Maßnahme besteht darin, dass das Befestigungselement als solches als eine Kennung bildender Informationsträger für Angaben eingerichtet sein kann, die die Schlauchleitung identifizieren und mit Daten des integrierten End-Schlauchtransponders korrespondieren. Es wird erreicht, dass der Nutzer die Daten der Schlauchleitung schnell, insbesondere durch Lesen von Beschriftung an dem Befestigungselement, z. B. auch in Form eines Barcodes erfassen kann, ohne dass insoweit korrespondierende Daten des Transponders mittels Lesegerät ausgelesen werden müssen.

Eine bevorzugte Gestaltung der Erfindung besteht darin, dass die End-Schlauchtransponder Daten zum Identifizieren der Schlauchleitungslänge vorhalten. Eine gegebenenfalls nachträgliche, ohne Weiteres nicht erkennbare Verkürzung der Schlauchleitung zwischen ihren Anschlussenden kann so zuverlässig erkannt werden.

Eine vorteilhafte und bevorzugte Weiterbildung der Erfindung besteht darin, dass die Schlauchleitung in Anordnung mit den zu den Anschlussenden der Schlauchleitung zugehörigen Anschlussarmaturen vorgesehen wird, wobei jede Anschlussarmatur unlösbar mit einem Armaturtransponder ausgestattet ist. Jeweils der End-Schlauchtransponder und der zugehörige Armaturtransponder bilden ein Transponderpaar, das mit Daten beschickt ist, die eine eindeutige Zuordnung der beiden Transponder und damit von Leitung, Leitungs-Anschlussende und Armatur definieren.

Unteransprüche sind auf die genannten und noch andere zweckmäßige und vorteilhafte Ausgestaltungen der Erfindung gerichtet. Besonders zweckmäßige und vorteilhafte Ausbildungsformen oder -möglichkeiten der Erfindung werden anhand der folgenden Beschreibung der in der schematischen Zeichnung dargestellten Ausführungsbeispiele näher beschrieben.

Es zeigen
- Fig. 1: in axonometrischer Darstellung eine erfindungsgemäße Schlauchleitung mit an ihren Anschlussenden angebrachten Schlauchtranspondern, wobei zudem an den Schlauchleitungs-Anschlussenden Armaturen mit Arma- turtranspondem angeordnet sind und
- Fig. 2 und 3: im Detail einen einen Schlauchtransponder tragenden Befestigungsring zur Anbringung am Schlauchleitungs-Anschlussende.

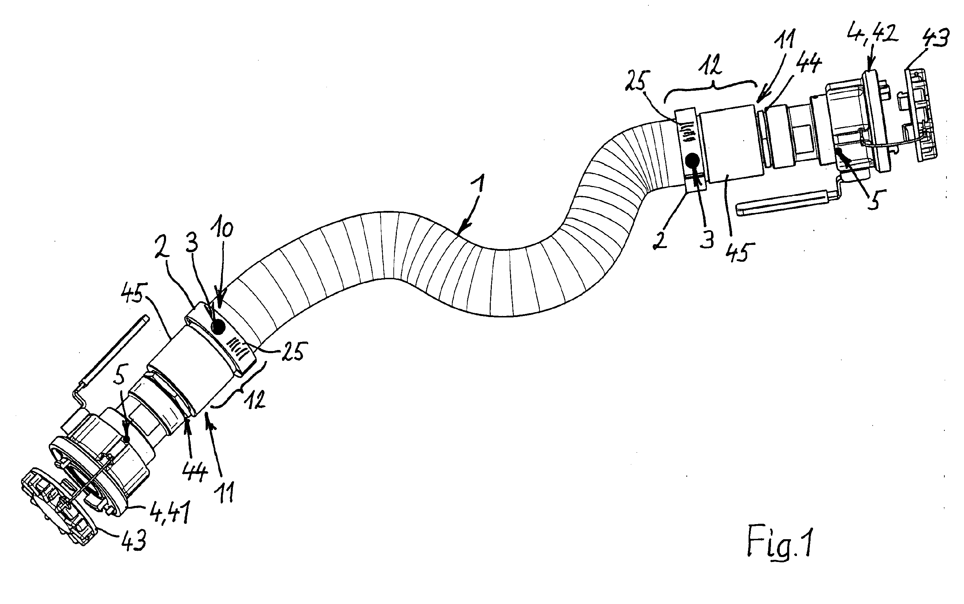

Aus Fig. 1 ist eine bis zu einem gewissen Grad flexible Schlauchleitung 1 ersichtlich, deren Wandung 10 zum Beispiel aus PTFE (Polytetrafluorethylen) gebildet ist. Die Schlauchleitung 1 weist Anschlussenden 11 auf, die mit Anschlussbereichen 12 ausgebildet sind. Die Schlauchleitung ist mit spezifischer Ausstattung konfektioniert und wird zur Anordnung und Einbindung mit zugehörigen Anschlussarmaturen 4 bereitgehalten.

Jedes Anschlussende 11 ist mit einer Anschlussarmatur 4 verbunden. Die Anschlussarmaturen 4 sind Kupplungselemente 41, 42 mit Schutzdeckeln 43. Diese sind mit Ventilverschlüssen ausgestattet, die mittels Hebel betätigbar sind. Jedes Kupplungselement 41, 42 bildet Teil einer Trockenkupplung, mittels der die Schlauchleitung 1 an eine andere Leitung, einen Flansch oder Stutzen angeschlossen wird. Andere Verbindungen, z. B. ventilfreie Schraub- oder Flanschverbindungen können gleichermaßen vorgesehen sein.

Die Anschlussenden 11 sind jeweils mittels Schlaucheinbindung mit dem Kupplungselement 41 bzw. 42 verbunden. Die Kupplungselemente 41, 42 sind jeweils mit einem Stutzen 44 ausgestattet, der sich in Eingriff mit dem Anschlussende 11 im Wesentlichen längs des Anschlussbereichs 12 befindet. Diese Eingriffsverbindung ist durch einen Schlaucheinbinder 45 fixiert, der im Ausführungsbeispiel vorteilhaft durch eine Presshülse gebildet ist. Statt dessen können zum Beispiel auch Schaleneinbindungen vorgesehen werden.

Erfindungsgemäß ist die Schlauchleitung 1 an beiden Anschlussenden 11 mit einem Schlauchtransponder 3 versehen. Dieser ist mittels eines Befestigungselements 2 in Form eines einen Kreisquerschnitt aufweisenden Befestigungsrings 21 an dem zugehörigen Anschlussende 11 der Schlauchleitung 1 angebracht. Das Befestigungselement 2 ist derart an der Schlauchleitung 1 befestigt, dass es unmittelbar an die zugehörige Anschlussarmatur 4 angrenzt. Der das Befestigungselement 2 bildende Befestigungsring 21 ist als Klemmring ausgebildet, der im Anschlussbereich 12 der Schlauchleitung 1 angeordnet und befestigt ist.

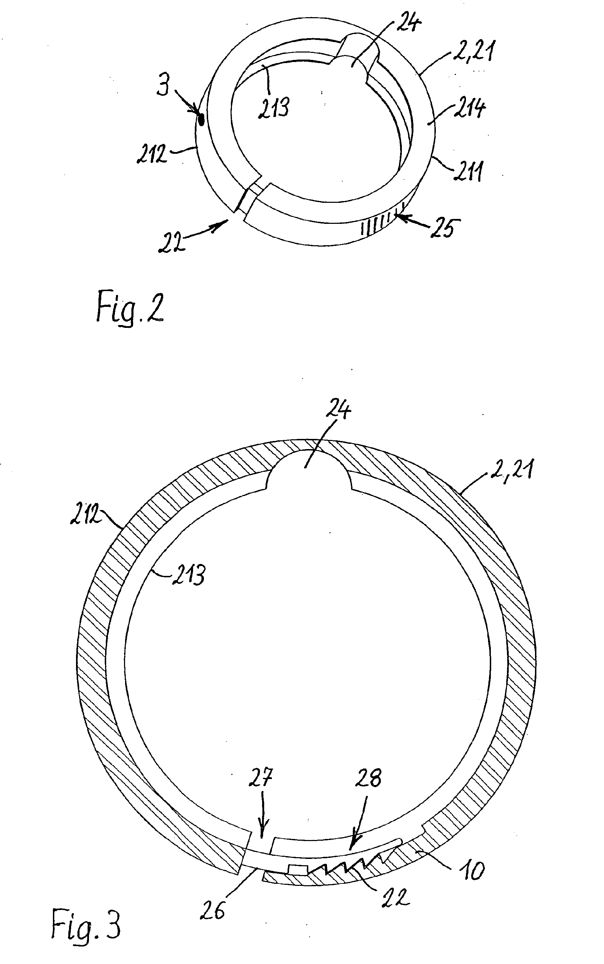

Wie aus Fig. 2, 3 ersichtlich, weist der Befestigungsring 21 einen ihn zum Anbringen an der Schlauchleitung 1 offen haltenden und ihn zur Befestigung schließenden unlösbaren, das heißt nur durch Zerstörung lösbaren Einwegverschluss 22 auf. Es handelt sich um einen Rastverschluss, der zwischen Schenkelabschnitten 211, 212, die durch einen radialen Schließspalt 27 und eine Ausnehmung 24 am Ringinnenumfang getrennt sind, ausgebildet ist. Der eine Schenkelabschnitt 211 ist an seinem Schließende mit verdeckter Innenverzahnung versehen. Ein den Befestigungsring 21 schließender Steg 26 an dem anderen Schenkelabschnitt 212 weist korrespondierende Zähne auf. Die Zähne verzahnen und verrasten mit Sägezahnprofilen. Wie man aus der Schnittdarstellung in Fig. 3 erkennt, ist die Rastverbindung 28 verborgen. Das Ringmaterial ist so steif, dass die Verzahnung zwischen dem Steg 26 und der Wandung 10 in Radialrichtung und Umfangsrichtung unlösbar ist. Der Klemmdurchmesser des Befestigungsrings 21 wird durch die Anzahl der in Längsumfangsrichtung ineinandergreifenden Rastzähne bestimmt. Um diese Einstellung bequem ausführen zu können, ist der Befestigungsring aus Rückstellkraft aufweisendem, federelastischem Material, zum Beispiel aus Metall oder Kunststoff gebildet. Die Ausnehmung 24 an der der Rastverbindung 28 und dem Steg 26 gegenüberliegenden Ringseite sorgt dafür, dass die Schenkelabschnitte 211, 212 zum Ansetzen des Befestigungsrings 21 auf die Schlauchleitung 1 ausreichend aufgespreizt werden können, während sie zum unlösbaren Schließen des Befestigungsrings 21 aufeinanderzufedern und die Rastverbindung 28 mit der verdeckten unlösbaren Verzahnung hergestellt ist.

Der Befestigungsring 21 weist stirnseitige Ränder 213, 214 auf, die eine Profilkontur bilden, die sich bei gesetztem verschlossenem Befestigungsring 21 in gewissem Maß in die Wandung 10 der Schlauchleitung 1 eindrückt oder einkerbt, so dass der rastbare Befestigungsring 21 im angebrachten und geschlossenen Zustand zumindest in Axialrichtung unverschieblich auf der Schlauchleitungswandung 10 sitzt und in diese eingreift. In diesem Bereich bilden der Befestigungsring 21 und die Schlauchleitungswandung 10 eine integrierte Befestigungseinheit, die in dem Sinne unlösbar ist, dass sie nicht frei, sondern nur mit Beschädigung der Rastverbindung 28 bzw. der Schlauchleitung 1 geöffnet werden kann.

Jeder Befestigungsring 21 trägt einen in ihn eingelassenen Transponder 3. Der Transponder 3 befindet sich in dem Befestigungsring 2 in versenkter, aber bündig an der Mantelaußenfläche des Befestigungsrings 21 abschließender Anordnung. Der Transponder 3 kann zum Beispiel in eine korrespondierende Ausnehmung am Mantelumfang des Befestigungsrings 21 eingeklebt sein. Er kann auch form- und/oder stoffschlüssig so in den Befestigungsring 21 eingelassen sein, dass letzterer, z. B. als gegossenes Teil, den Transponder 3 im Herstellungsprozess einverleibt. Der Schlauchtransponder 3 kann unter Verwendung einer Gussmasse in eine passende nicht dargestellte Bohrung in dem Befestigungsring 21 eingegossen sein. In jedem Fall ist der Transponder 3 unlösbar, das heißt er kann gegebenenfalls nur durch seine Zerstörung und die Zerstörung des Befestigungsrings 21 entfernt werden.

Jeder Befestigungsring 21 trägt nicht nur den zugehörigen Transponder 3, sondern auch eine Beschriftung 25. Diese ist nur schematisch dargestellt. Die Beschriftung 25 kann zum Beispiel in die Oberfläche des Befestigungsrings 21 eingraviert werden. Sie gibt mit Identifizierungs-Angaben Auskunft über die Schlauchleitung, zum Beispiel zu Hersteller, Registriernummer, Schlauchleitungstyp, Druck- und Temperaturbereich u. a.. Die Beschriftung 25 auf dem Befestigungsring 21 ist nur optional. Erfindungsgemäß ist es von Bedeutung, dass die beiden Befestigungsringe 21 an den Anschlussenden 11 jeweils mit dem Transponder 3 eingerichtet sind, der ebenfalls die genannten Identifizierungsangaben in Form von mit einem RFID-Lesegerät abrufbaren Daten enthält, die unveränderlich sind und nur gelesen werden können. In die Schlauchtransponder 3 sind die spezifischen Charakteristika der Schlauchleitung 1 repräsentierende Daten eingeschrieben, mit denen die Schlauchleitung 1 individualisiert ist und identifiziert wird. Insbesondere werden auch Kenndaten hinterlegt, die sich auf die zu verwendenden Armaturen beziehen. Dadurch wird der Verwechslung von Armaturen entgegengewirkt, und gegebenenfalls wird eine Verwechslung erkennbar. Die Transponder 3 bilden ein weitgehend fälschungssicheres Kennmittel. Sie bieten zudem den Vorteil, dass sie eine relativ große Datenmenge mit entsprechender Identifizierungs-Information und auch mit Zusatzinformation aufnehmen können. Dies kann die mit Beschriftung der Befestigungsringe 21 vorgesehene Zusatzkennung nicht leisten.

Man erkennt, dass die Schlauchleitung 1 mit ihren an den Anschlussenden 11 angebrachten Transpondern 3 vor Manipulation weitgehend gesichert ist, indem Manipulation von vornherein behindert und jedenfalls durch Beschädigung der beschriebenen Teile erkennbar und nachgewiesen wird. Dadurch, dass die Befestigungsringe 21 an die Anschlussenden 11 gesetzt sind, wird eine Manipulation an den Schlauchleitungsenden zur Anpassung an nicht zugelassene Anschlussarmaturen festgestellt. Auch der Bereich zwischen den Befestigungsringen 21 bzw. den Schlauchtranspondern 3 ist vor Manipulation geschützt, da dort Veränderungen mit den nachprüfbaren Transponderdaten nicht konform wären. Werden zum Beispiel die Schlauchtransponder 3 mit Informationen zur Schlauchleitungslänge versehen, so kann eine nachträgliche Verkürzung der Schlauchleitung besonders einfach festgestellt werden.

Im Ausführungsbeispiel sind auch die zu den Anschlussenden 11 der Schlauchleitung 1 zugehörigen Anschlussarmaturen 4 jeweils unlösbar mit einem Armaturtransponder 5 ausgestattet. Der Armaturtransponder 5 kann gleichermaßen wie der Schlauchtransponder 3 derart an der Anschlussarmatur 4 angebracht werden, dass die Anschlussarmatur 4 und der Armaturtransponder 5 eine integrale Verbindungseinheit bilden, die beim Entfernen des Armaturtransponders 5 erkennbar beschädigt wird.

Der Schlauchtransponder 3 und der Armaturtransponder 5 bilden jeweils ein Transponderpaar, das mit Daten beschickt ist, die eine eindeutige Zuordnung der beiden Transponder 3, 5 bzw. jeweils des Anschlussendes 11 der spezifischen Schlauchleitung 1 mit der zugehörigen Armatur 5 definiert und besonders einfach feststellbar und nachweisbar macht. Zum Beispiel kann festgelegt sein, dass wesentliche Daten des Schlauchtransponders 3 und des Armaturtransponders 5 übereinstimmen müssen. Dies kann z. B. mit üblichem RFID-Lesegerät erfasst und kontrolliert werden.

Jede andere geeignete Erfassungsmethode von auf den Transpondern gespeicherten Daten kommt auch in Betracht.

## Patentansprüche

1. Mit einem Kennungsmittel versehene Schlauchleitung (1) mit Anschlussenden (11), die jeweils zum Anschluss an eine zum Anschlussende (11) zugehörige Anschlussarmatur (4) ausgebildet sind, wobei das Kennungsmittel Daten zur eindeutigen Identifizierung der Schlauchleitung (1) enthält, **dadurch gekennzeichnet, dass** das Kennungsmittel dadurch gebildet ist, dass an jedem Schlauchleitungs-Anschlussende (11) eine Kennung in Form eines Schlauchtransponders (3) unlösbar und ortsfest angebracht ist, wobei die beiden endseitigen Schlauchtransponder (3) jeweils frei von der Anschlussarmatur (4) mit der Schlauchleitung (1) verbunden und mit wenigstens teilweise übereinstimmenden, dauerhaft und unveränderlich hinterlegten Identifizierungsdaten versehen sind.

2. Schlauchleitung nach Anspruch 1, **dadurch gekennzeichnet, dass** jedes Schlauchleitungs-Anschlussende (11) einen in Eingriff mit der zugehörigen Anschlussarmatur (4) gelangenden Anschlussbereich (12) aufweist, an dem der jeweilige End-Schlauchtransponder (3) angebracht ist.

3. Schlauchleitung nach Anspruch 1 oder 2, **dadurch gekennzeichnet, dass** wenigstens einer der End-Schlauchtransponder (3) unlösbar in ein Befestigungselement (2) integriert ist, das unlösbar und ortsfest mit der Wandung (10) der Schlauchleitung (1) verbunden ist.

4. Schlauchleitung nach Anspruch 3, **dadurch gekennzeichnet, dass** zwischen dem Befestigungselement (2) und der Schlauchleitung (1) eine stoffschlüssige und/oder kraftschlüssige, nur mit Beschädigung der Schlauchleitungswandung (10) zerstörbare Verbindung ausgebildet ist.

5. Schlauchleitung nach Anspruch 3 oder 4, **dadurch gekennzeichnet, dass** das Befestigungselement (2) durch einen von der Schlauchleitung (1) verbindungswirksam durchsetzten Befestigungsring (21) gebildet ist, der mit einem ihn zum Anbringen an der Schlauchleitung (1) offen haltenden und ihn zur Befestigung unlösbar schließenden Einwegverschluss (22) ausgebildet ist.

6. Schlauchleitung nach einem der Ansprüche 3 bis 5, **dadurch gekennzeichnet, dass** das Befestigungselement (2) mit einem eine formschlüssige Verbindung mit der Schlauchleitung (1) herstellenden, es zumindest gegen axiale Verschiebung längs der Schlauchleitung (1) sperrenden Profil ausgebildet ist.

7. Schlauchleitung nach einem der Ansprüche 3 bis 6, **dadurch gekennzeichnet, dass** das Befestigungselement (2) als solches als eine Kennung bildender Informationsträger für Angaben eingerichtet ist, die die Schlauchleiung (1) identifizieren und mit Daten des integrierten End-Schlauchtransponders (3) korrespondieren.

8. Schlauchleitung nach Anspruch 7, **dadurch gekennzeichnet, dass** das Befestigungselement (2) die Kennungs-Angaben in Form einer dauerhaften unveränderbaren Beschriftung (25) trägt.

9. Schlauchleitung nach einem der Ansprüche 1 bis 8, **dadurch gekennzeichnet, dass** die End-Schlauchtransponder (3) Daten zum Identifizieren der Schlauchleitungslänge speichern.

10. Schlauchleitung nach einem der Ansprüche 1 bis 9 in Anordnung mit den zu den Anschlussenden (11) der Schlauchleitung (1) zugehörigen Anschlussarmaturen (4), **dadurch gekennzeichnet, dass** jede Anschlussarmatur (4) unlösbar mit einem Armaturtransponder (5) ausgestattet ist, wobei jeweils der End-Schlauchtransponder (3) und der zugehörige Armaturtransponder (5) ein Transponderpaar bilden, das mit Daten beschickt ist, die eine eindeutige Zuordnung der beiden Transponder (3, 5) definieren.
